# EUROPÄISCHE PATENTSCHRIFT

(11) **EP 0 370 426 B1**
(45) Veröffentlichungstag und Bekanntmachung des Hinweises auf die Patenterteilung: **31.03.1993**
(21) Anmeldenummer: 89121420.7
(22) Anmeldetag: 20.11.1989
(51) Int. Cl.: G08B 13/191, G01J 5/34

(54) **Infraroteindringdetektor**
Infrared intrusion detector
Détecteur infrarouge d'intrusion

(30) Priorität: 25.11.1988 CH 4397/88
(43) Veröffentlichungstag der Anmeldung: 30.05.1990
(73) Patentinhaber: CERBERUS AG, CH-8708 Männedorf (CH)
(72) Erfinder: Müller, Kurt Albert, CH-8712 Stäfa (CH)
(74) Vertreter: Tiemann, Ulrich, Dr.-Ing.

(56) Entgegenhaltungen:
- GB-A- 2 122 339
- US-A- 4 437 003
- US-A- 4 441 023

## Beschreibung

Die Erfindung betrifft einen pyroelektrischen Sensor für einen passiven Infraroteindringdetektor zur Detektion des Eindringens Infrarotstrahlung aussendender Objekte in zu überwachende Räume mit mehreren strahlungsempfindlichen Sensorelementen gemäß dem Oberbegriff des Patentanspruchs 1.

Die Verwendung von Infrarotstrahlungsdetektoren ist allgemein bekannt. Sie werden vielfach angewendet, besonders auch zur Detektion von sich bewegenden, Infrarotstrahlung aussendenden Objekten, beispielsweise in Eindringüberwachungsanlagen. Die in solchen Infraroteindringdetektoren verwendeten pyroelektrischen Sensoren enthalten flächenförmig angeordnete, zu dünnen Schichten geschliffene Plättchen, sogenannte Sensorelemente aus pyroelektrischen Materialien mit an entgegengesetzten Flächen angeordneten Elektroden. Als pyroelektrische Materialien dienen beispielsweise Lithiumtantalat, Blei-Zirkonat-Titanat oder Polyvinylidenfluorid. Die Sensorelemente bilden Kondensatoren, die im allgemeinen eine Kapazität von etwa 10 pF aufweisen. Bei einer Temperaturänderung des pyroelektrischen Materials, beispielsweise als Folge der Absorption von Infrarotstrahlung, ändert sich die Polarisation des Materials. Die sich daraus ergebende Umverteilung von an der Oberfläche des Materials liegenden Ausgleichsladungen bewirkt das Fließen eines Stromes im Sensorschaltkreis.

Zur Fokussierung der Infrarotstrahlung auf die Sensorelemente wird unter anderem ein aus einer Vielzahl von Spiegelelementen oder Fresnellinsen bestehendes optisches System verwendet. Durch die Optik werden unterschiedliche Empfindlichkeitsbereiche des Detektors definiert. Der Infraroteindringdetektor spricht auf ein sich bewegendes Objekt an, dessen Temperatur von der Temperatur der Umgebung verschieden ist, indem er die durch den Eintritt des Objektes in einen Empfindlichkeitsbereich auf die Sensorelemente fallende Infrarotstrahlung feststellt und die dadurch bewirkte Änderung des Ausgangssignals des Sensors auswertet. Das Sensorausgangssignal kann zur Betätigung eines Alarms oder zum Ein- und Ausschalten von Licht und/oder anderen Abschreckungsanlagen verwendet werden.

In Eindringdetektionssystemen ist es möglich, einen Detektor zu verwenden, der nur ein einziges Sensorelement aus pyroelektrischem Material enthält. Vorteilhafterweise enthält der Sensor zwei oder mehr Sensorelemente. Eine solche Anordnung wird unter anderem dazu verwendet, eine gewisse Unempfindlichkeit gegenüber unerwünschten Signalen, die durch Änderungen der Umgebungstemperatur oder der Hintergrundstrahlung verursacht werden, zu erzielen, indem die beiden Sensorelemente in Differentialschaltung miteinander verbunden werden. Bei einer Ausgestaltung ist der Sensor so aufgebaut, daß gleichförmige Änderungen der Strahlung, die aus dem überwachten Raum auf beide Sensorelemente fällt, beispielsweise Änderungen der Hintergrundstrahlung, Ausgleichsladungen über beiden Sensorelementen, die gegeneinandergeschaltet sind, erzeugen, so daß im Endergebnis kein Signal erzeugt wird, während eine Änderung der aus dem überwachten Bereich auf nur ein Sensorelement auftreffenden Strahlung, ein Differenzausgangssignal erzeugt.

Bei einem solchen bekannten Infrarotstrahlungssensor ist ein Paar Sensorelemente in einer gemeinsamen Ebene angeordnet und jedes besteht aus einem dünngeschliffenen Plättchen aus polarisiertem pyroelektrischen Material, wobei jeweils an gegenüberliegenden Hauptoberflächen der Sensorelemente Elektroden überlappend angeordnet sind und die Elektroden sich im allgemeinen senkrecht zur Polarisationsrichtung erstrecken. Die elektrische Verbindung der Sensorelemente innerhalb des Sensors erfolgt über ihre Elektroden, die zwei parallel oder in Serie geschaltete Kondensatoren bilden, wobei innerhalb der Parallel-oder Serieschaltung die Polarisation des pyroelektrischen Materials entgegengesetzt gerichtet ist. Solche Sensoren werden im allgemeinen als "Dual"-Sensoren bezeichnet.

Dual-Sensoren sind für die Verwendung in Eindringdetektionssystemen sehr gut geeignet. So ist beispielsweise in der US-A-4,437,003 ein Dualsensor beschrieben, dessen wesentlicher Vorteil darin besteht, daß Fluktuationen im thermischen Zustand des Hintergrunds kein Ausgangssignal des Eindringdetektors erzeugen. Bei Sensoren mit Einzelelementen würden solche Temperaturfluktuationen ein Störsignal erzeugen, das zu einem Fehlalarm führen kann. Ferner ist in der US-A-4,441,023 ein Dualsensor beschrieben, bei dem zwei längliche Sensorelemente freitragend nur mit einer Kante auf das Substrat aufgeklebt sind, do daß Stöße oder Vibrationen auf beide Elemente gleichmäßig einwirken, so daß sich Spannungen als Folge des piëzoelektrischen Effekts auf beide Sensorelemente gleichmäßig auswirken und sich folglich aufheben.

In der US-A-4,614,938 ist ein Infraroteindringdetektionssystem mit einem Sensor mit vier (oder mehr) Sensorelementen beschrieben. Der Sensor besteht aus zwei Dual-Sensoren mit zwei separaten Verstärkerkanälen in demselben Gehäuse. Die vier Sensorelemente sind dicht nebeneinander angeordnet, und es wird eine Vielzahl von Empfindlichkeitsbereichen mit vernachlässigbar kleinen Lücken erzielt.

Ein Vorteil des Infraroteindringdetektionssystems gemäß US-A-4,614,938 besteht darin, daß zufällige Störstromspitzen, die bei starken Änderungen der Umgebungstemperatur im pyroelektrischen Material entstehen und welche bei normalen Dual-Sensoren Fehlalarme auslösen würden, unterdrückt werden. Zur Alarmauslösung braucht es in beiden Auswertekanälen etwa gleichzeitig ein genügend hohes Signal; die Wahrscheinlichkeit, daß ein zufälliges Störsignal der erwähnten Art nahezu gleichzeitig in beiden Auswertekanälen auftritt, ist verhältnismäßig gering.

Demgegenüber weist das Infraroteindringdetektionssystem gemäß US-A-4,614,938 den Nachteil auf, daß die Sensorelemente der beiden Dual-Sensoren gegeneinander versetzt angeordnet sind und daß die beiden Auswertekanäle demgemäß über ein zugeordnetes optisches System getrennte, sich nicht überlappende Empfindlichkeitsbereiche überwachen. Ein Eindringling muß daher, um sicher detektiert zu werden, einen größeren Weg innerhalb eines Zeitintervalls von einigen Sekunden zurücklegen.

Ein weiterer Nachteil des Infraroteindringdetektionssystems gemäß US-A-4,614,938 besteht darin, daß zwei Dual-Sensoren und zwei getrennte Auswertekanäle und demgemäß zwei Vorverstärker erforderlich sind, was den Detektor entsprechend teurer werden läßt. Ferner ist das Fehlalarmverhalten eines solchen Infraroteindringdetektors gegenüber turbulent bewegter warmer oder kalter Luft und bei Hochfrequenzstörungen im Verhältnis zu Sensoren mit einem normalen Dual-Sensor nicht verbessert, da diese Störungen auf gleiche Weise in beide Auswertekanäle eindringen.

Der Nachteil, daß die beiden Auswertekanäle nicht überlappende Empfindlichkeitsbereiche überwachen und ein Eindringling daher, um sicher detektiert zu werden, einen größeren Weg innerhalb eines bestimmten Zeitintervalls zurücklegen muß, kann gemäß US-A-4,697,081 dadurch verbessert werden, daß ein pyroelektrisches Sensorelement des einen Dual-Sensors mit einem pyroelektrischen Sensorelement des anderen Dual-Sensors verzahnt ist. Daher überwachen beide Auswertekanäle über die Optik des Detektors praktisch denselben Empfindlichkeitsbereich, das Eindringsignal erscheint ohne Zeitverzögerung in beiden Kanälen, die Schreitdistanz für einen Eindringling wird kürzer, und die Detektion wird damit sicherer. Auf die übrigen, oben erwähnten Nachteile hat diese Anordnung der Sensorelemente keinen Einfluß.

In der GB-A2'122'339 ist ein Infrarot-Eindringdetektor beschrieben, der einen pyroelektrischen Sensor mit mehreren in Reihe oder parallel oder in einer Kombination von in Reihe oder parallel angeordneten strahlungsempfindlichen Sensorelementen aufweist und dessen Ausgang mit dem Gateanschluß eines als Impedanzwandler wirkenden Feldeffekttransistors verbunden ist,
Ausgehend von diesem Stand der Technik liegt der vorliegenden Erfindung die Aufgabe zugrunde, einen pyroelektrischen Sensor mit den im Oberbegriff des Patentanspruchs 1 angegebenen Merkmalen so auszugestalten, daß er die Nachteile der bekannten pyroelektrischen Sensoren nicht aufweist und insbesondere einen pyroelektrischen Sensor zu schaffen, bei welchem die Sensorelemente-Anordnung eine bessere Anpassung der Sensorelementedimensionen an das durch die Detektoroptik auf die Sensorelementeebene projizierte Bild eines aufrecht gehenden Menschen, der ein Breite:Höhen-Verhältnis von etwa 1:5 hat, ermöglicht.

Eine weitere Aufgabe der vorliegenden Erfindung besteht darin, einen pyroelektrischen Sensor zu schaffen, welcher es ermöglicht, im Vergleich zu den pyroelektrischen Sensoren des Standes der Technik mit der gleichen Sensorelementefläche mehr Informationen zu sammeln, ohne andere Nachteile in Kauf nehmen zu müssen.

Diese Aufgabe wird bei einem pyroelektrischen Sensor der vorstehend genannten Art durch die kennzeichnenden Merkmale des Patentanspruchs 1 gelöst. Bevorzugte Ausführungsformen der Erfindung und Ausgestaltungen sind in den abhängigen Patentansprüchen definiert.

Eine bevorzugte Ausführungsform des erfindungsgmäßen Infraroteindringdetektors besteht darin, daß der pyroelektrische Sensor zwei parallel geschaltete pyroelektrische Sensorelemente in Serie zu zwei weiteren parallel geschalteten pyroelektrischen Sensorelementen aufweist und daß ein pyroelektrisches Sensorelement des einen Paares und ein gleich polarisiertes pyroelektrisches Sensorelement des anderen Paares parallel zueinander und im Abstand voneinander angeordnet sind und daß die anderen beiden, umgekehrt polarisierten, pyroelektrischen Sensorelemente dazwischen übereinander angeordnet sind.

Eine andere Ausgestaltung einer bevorzugten Ausführungsform des erfindungsgemäßen Infraroteindringdetektors besteht darin, daß der pyroelektrische Sensor zwei parallel geschaltete pyroelektrische Sensorelemente in Serie zu zwei weiteren parallel geschalteten pyroelektrischen Sensorelementen aufweist und daß die vier pyroelektrischen Sensorelemente dicht neben- und übereinander so angeordnet sind, daß sie ein Rechteck bilden.

Weitere Ausführungsformen des erfindungsgemässen Infraroteindringdetektors bestehen darin, daß der pyroelektrische Sensor vier in Serie geschaltete Sensorelemente aufweist und daß jeweils parallel zu den pyroelektrischen Sensorelementen ein Widerstand geschaltet ist. Diese Widerstände haben vorzugsweise einen Widerstandswert von etwa 100 Gigaohm.

Bei allen Ausführungsformen des erfindungsgemäßen Infraroteindringdetektors betragen die Kapazitäten der pyroelektrischen Sensorelemente vorzugsweise etwa 10 pF.

Die Erfindung wird an Hand der in den Zeichnungen dargestellten Ausführungsbeispiele näher erläutert. Es zeigen
- Figur 1: die Draufsicht auf einen Sensor gemäß vorliegender Erfindung,
- Figur 2: die Draufsicht auf eine zweite Ausführungsform eines erfindungsgemäßen Sensors,
- Figur 3: eine mögliche Schaltung für die pyroelektrischen Sensorelemente,
- Figur 4: eine zweite Schaltungsmöglichkeit für die pyroelektrischen Sensorelemente,
- Figur 5: eine dritte Schaltungsmöglichkeit für die pyroelektrischen Sensorelemente,
- Figur 6: eine vierte Schaltungsmöglichkeit für die pyroelektrischen Sensorelemente,
- Figur 7: den typischen Signalverlauf eines Sensors gemäß Figuren 1 und 3,
- Figur 8: den typischen Signalverlauf eines Sensors gemäß Figuren 2 und 3,
- Figur 9: die Seitenansicht der Strahlungsempfangsbereiche eines Infraroteindringdetektors gemäß Stand der Technik,
- Figur 10: die Seitenansicht der Strahlungsempfangsbereiche eines erfindungsgemäßen Infraroteindringdetektors und
- Figur 11: die Draufsicht auf einen Teil der Strahlungsempfangsbereiche eines erfindungsgemäßen Infraroteindringdetektors gemäß Fig. 1 am Raumboden.

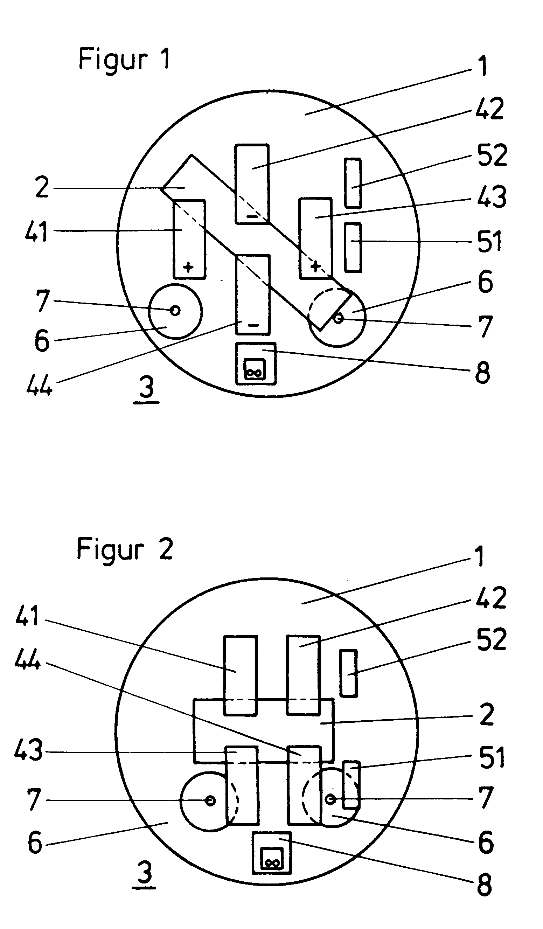

In Figur 1 ist die Draufsicht auf den pyroelektrischen Sensor 3 eines Infraroteindringdetektors gemäß vorliegender Erfindung dargestellt. Auf einen aus Metall bestehenden Sockel 1, ist ein rechteckiges ca. 0,4 mm dickes Substrat 2 aus Aluminiumoxid aufgeklebt. Auf dieses Substrat sind die vier pyroelektrischen Sensorelemente 41, 42, 43, 44 (z.B. EPO-TEK H32C der Fa. Polyscience AG, Schweiz) in der Weise aufgeklebt, daß nur jeweils eine Ecke mit dem Substrat verbunden ist. Die vier pyroelektrischen Sensorelemente 41, 42, 43, 44 können entweder so angeordnet sein, daß die beiden mittleren Sensorelemente 42, 44, die nicht zu einem Paar parallel geschalteter pyroelektrischer Sensorelemente gehören, mit ihren schmalen Kanten dicht nebeneinander liegen, während die anderen beiden pyroelektrischen Sensorelemente 41, 43 parallel zu den langen Kanten der pyroelektrischen Sensorelemente 42, 44 rechts und links davon liegen, wie es in Figur 1 dargestellt ist.

Die vier pyroelektrischen Sensorelemente 41, 42, 43, 44 können aber auch je zwei und zwei paarweise nebeneinander angeordnet sein, wobei die paarweise nebeneinander liegenden pyroelektrischen Sensorelemente 41, 42; bzw. 43, 44 jeweils auch parallel geschaltet sind. Diese Anordnung ist in Figur 2 dargestellt. Die vier pyroelektrischen Sensorelemente 41, 42, 43, 44 sind dabei jeweils nur an einer der schmalen Kanten auf das Substrat 2 aufgeklebt, während der größte Teil des Sensorelementes frei über das Substrat 2 hinausragt. Auf dem Sockel 1 befinden sich noch der Sperrschicht-Feldeffektransistor 8 (JFET) und die beiden Widerstände 51, 52, die den Sensorelementen parallel geschaltet sind.

Bei beiden Ausführungsformen werden die (nicht dargestellten) elektrischen Verbindungen durch die Anschlußstifte 7, die sich in Glasisolierungen 6 befinden nach außen zu der (nicht dargestellten) Auswerteschaltung geführt.

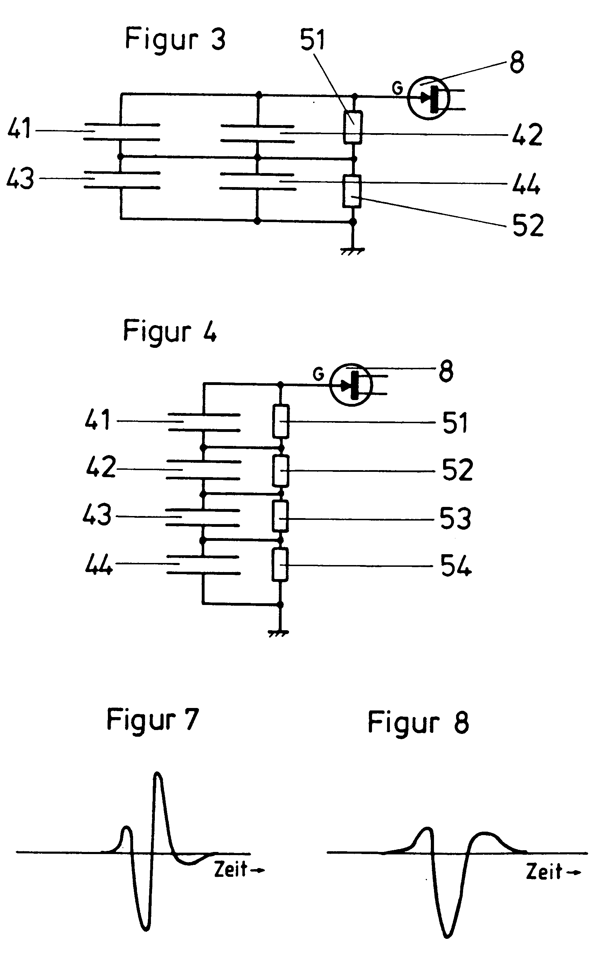

In Figur 3 ist eine Schaltskizze für einen pyroelektrischen Sensor gemäß Figur 1 oder 2 dargestellt. Die vier pyroelektrischen Sensorelemente 41, 42, 43, 44 sind paarweise mit einem Widerstand 51, bzw. 52 parallel geschaltet. Je zwei pyroelektrische Sensorelemente 41 und 42; bzw. 43 und 44 (zusammen mit einem Widerstand 51; bzw. 52) sind dann in Serie zwischen Masse und den Gate-Anschluß G eines Sperrschicht-Feldeffekttransistors 8 geschaltet. Der FET ist der Eingang eines einzigen Verstärkerkanals einer nicht dargestellten Auswerteschaltung.

Drei andere Schaltungen für Ausgestaltungen eines pyroelektrischen Sensors 3 eines erfindungsgemäßen Infraroteindringdetektors sind in den Figuren 4, 5 und 6 dargestellt.

In Figur 4 sind die vier pyroelektrischen Sensorelemente 41, 42, 43, 44 jeweils mit einem Widerstand 51, 52, 53, 54, parallel geschaltet. Sämtliche pyroelektrischen Sensorelemente 41, 42, 43, 44 sind mit den parallel geschalteten Widerstaänden 51, 52, 53, 54 in Serie zwischen Masse und den Gate-Anschluß G eines Sperrschicht-Feldeffekttransistors 8 geschaltet. Der FET ist der Eingang eines einzigen Verstärkerkanals einer nicht dargestellten Auswerteschaltung. Die Widerstände haben vorzugsweise einen Widerstandswert von etwa 100 Gigaohm.

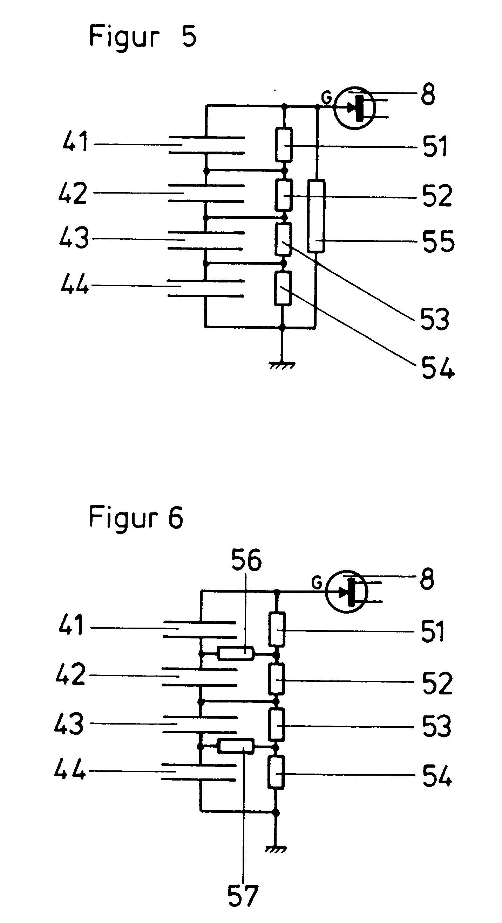

Die Ausführungsform gemäß Figur 5 enthält zusätzlich einen Widerstand 55 zwischen dem Gate-Anschluß des Feldeffekttransistors 8 und Erde, d.h. parallel zu den anderen Widerständen 51, 52, 53, 54. Bei dieser Ausführungsform des erfindungsgemäßen Infraroteindringdetektors hat der zwischen Gate-Anschluß und Erde parallel zu den anderen Widerständen 51, 52, 53, 54 geschaltete Widerstand einen Widerstandswert von etwa 100 Gigaohm, während die einzelnen parallel zu den Sensoren 41, 42, 43, 44 geschalteten Widerstände 51, 52, 53, 54 vorzugsweise einen Widerstandswert von 0,5 bis 1 Teraohm haben; diese dienen zum Fixieren der Potentiale zwischen den einzelnen Sensorelementen.

Die Ausführungsform gemäß Figur 6 enthält zusätzlich zu den parallel zu den in Serie geschalteten Sensoren 41, 42, 43, 44 geschalteten Widerständen 51, 52, 53, 54 zwei weitere Widerstände 56, 57 zwischen dem Verbindungspunkt des ersten 51 und zweiten Widerstandes 52 und dem Verbindungspunkt zwischen dem ersten 41 und zweiten Sensor 42, sowie zwischen dem Verbindungspunkt des dritten 53 und vierten Widerstandes 54 und dem Verbindungspunkt zwischen dem dritten 43 und vierten Sensor 44. Die parallel zu den in Serie geschalteten Sensoren 41, 42, 43, 44 geschalteten Widerstände 51, 52, 53, 54 haben vorzugsweise einen Widerstandswert von circa 100 Gigaohm, während die zwischen den Verbindungspunkt des ersten 51 und zweiten Widerstandes 52 und den Verbindungspunkt zwischen dem ersten 41 und zweiten Sensor 42, sowie zwischen den Verbindungspunkt des dritten 53 und vierten Widerstandes 54 und den Verbindungspunkt zwischen dem dritten 43 und vierten Sensor 44 geschalteten Widerstände 56, 57 vorzugsweise einen Widerstandswert von 0,5 bis 1 Teraohm haben.

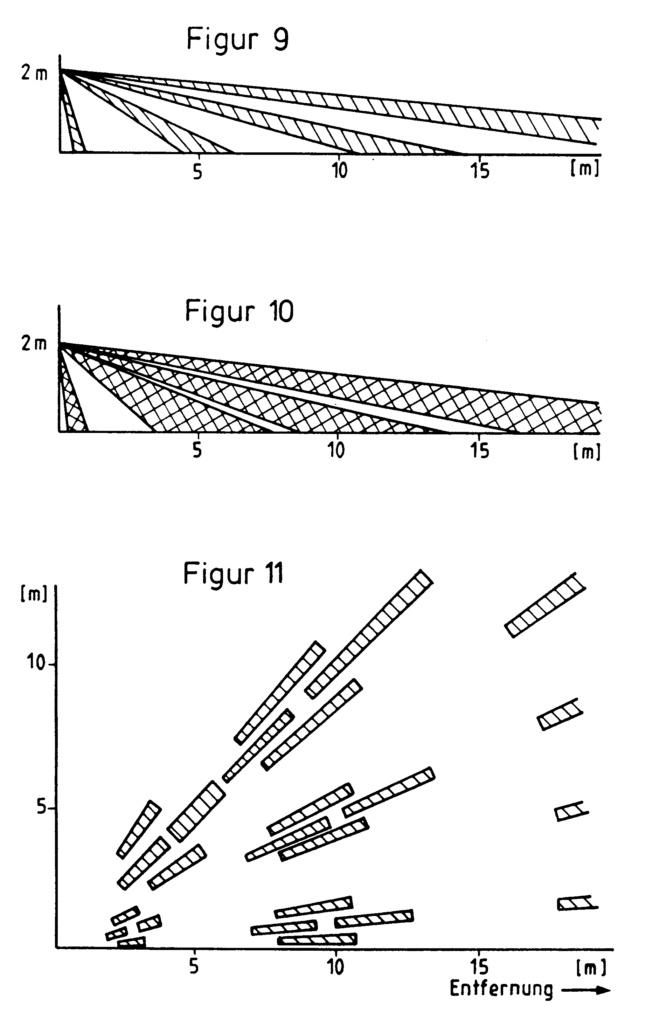

In den Figuren 7 und 8 sind die typischen Signalformen von pyroelektrischen Sensoren gemäß Figuren 1 und 2 dargestellt und zwar für eine Schrittgeschwindigkeit eines Eindringlings von ca. 50 Zentimeter pro Sekunde, eine Entfernung von ca. 12m und eine Brennweite des abbildenden Spiegelelementes der Infraroteindringdetektoroptik von ca. 30 mm.

Der pyroelektrische Sensor gemäß Figur 1 zeigt symmetrische Signale. Mit diesem pyroelektrischen Sensor ist eine sehr einfache Doppelschwellenauswertung mit gleich großer positiver wie negativer Detektionsschwelle zu realisieren. Die Signalamplituden der Hauptpeaks werden aber nicht doppelt sondern nur etwa 1,5-mal so groß wie bei einem einzelnen Kanal des pyroelektrischen Sensors gemäß US-A-4,614,938 oder US-A-4,597,081.

Der pyroelektrische Sensor gemäß Figur 2 zeigt asymmetrische, gleiche Signalformen wie ein Kanal des pyroelektrischen Sensors gemäß US-A-4,614,938 oder US-A-4,597,081. Die Signalamplituden sind aber doppelt so hoch. Eine Doppelschwellenauswertung der Signale ist durch zwei dem Signal angepaßte, ungleich hohe Detektionsschwellen komplizierter und daher teurer in der Ausführung. Diesen Nachteil kann man dadurch ausgleichen, daß die Auswertung in einem integrierten Schaltkreis durchgeführt wird.

In Figur 9 ist die Seitenansicht der Strahlungsempfangsbereiche eines Infraroteindringdetektors gemäß Stand der Technik dargestellt. Der Infraroteindringdetektor ist in einer Höhe von etwa 2 m an der Wand montiert; die kreuzschraffierten Bereiche geben die Bereiche an, aus denen der Detektor über das zugehörige optische System Strahlung empfangen kann (Strahlungsempfangsbereiche).

In Figur 10 ist die Seitenansicht der Strahlungsempfangsbereiche eines erfindungsgemäßen Infraroteindringdetektors dargestellt. Der Infraroteindringdetektor ist wie vorstehend in einer Höhe von etwa 2 m an der Wand montiert; die schraffierten Bereiche geben die Bereiche an, aus denen der Detektor über das zugehörige optische System Strahlung empfangen kann (Strahlungsempfangsbereiche). Man erkennt deutlich die erheblich dichtere Abdeckung des zu überwachenden Raumes mit Strahlungsempfangsbereichen.

In Figur 11 ist die Draufsicht auf einen Teil der Strahlungsempfangsbereiche eines erfindungsgemäßen Infraroteindringdetektors gemäß Fig. 1 am Raumboden dargestellt. Die schraffierten Zonen entsprechen den über das optische System des Detektors erfolgte Projektion der Sensorelemente auf den Raumboden. Es gelangen nur der Nah- und Mittelbereich zur Abbildung. Der Fernbereich kommt nur zum Teil zur Abbildung.

Der erfindungsgemäße passive Infraroteindringdetektor stellt einen sehr einfach zu realisierenden Detektor dar, der eine sehr dichte Raumüberdeckung ermöglicht. Er weist eine gegenüber herkömmlichen passiven Infraroteindringdetektoren erheblich größere Empfindlichkeit auf. Ein aufrecht gehender Eindringling liefert im Vergleich zu einem pyroelektrischen Sensor gemäß US-A-4,614,938 oder US-A-4,597'081 ein Signal mit etwa doppelt so großer Amplitude. Dadurch ist es möglich, den Infraroteindringdetektor entweder doppelt so empfindlich zu machen oder die Detektionsschwellen des Detektors zu verdoppeln und dadurch die Fehlalarmwahrscheinlichkeit gegenüber Luftturbulenzen und Hochfrequenzstörungen überproportional zu verringern.

Ein Detektor mit diesem pyroelektrischen Sensor erfaßt über jedes Spiegelelement seiner Optik einen doppelt so großen Raumwinkel wie ein pyroelektrischer Sensor gemäß US-A-4,614,938 oder US-A-4,597,081. Das ergibt eine stärkere Mittelung der empfangenen Strahlung über einen größeren beobachteten strahlungsempfindlichen Bereich, z.B. an einer Wand. Das hat zur Folge, daß heiße Stellen im Hintergrund, die z.B. durch Radiatoren, Sonnenschein, Fremdlichtquellen etc. hervorgerufen werden, ein verhältnismäßig kleineres Signal im Vergleich zu den Detektionsschwellen gemäß US-A-4,614,938 oder US-A-4,597,081.

## Patentansprüche

1. Pyroelektrischen Sensor mit mehreren in Reihe oder parallel oder in einer Kombination von in Reihe oder parallel angeordneten strahlungsempfindlichen Sensorelementen, dessen Ausgang zur Verwendung des Sensors in einem Infraroteindringdetektor mit dem Gateanschluß eines als Impedanzwandler wirkenden Feldeffekttransistors verbunden ist, dadurch gekennzeichnet, daß der pyroelektrische Sensor (3) zwei parallel oder in Serie geschaltete pyroelektrische Sensorelemente (41, 42) in Serie zu zwei weiteren parallel oder in Serie geschalteten pyroelektrischen Sensorelementen (43, 44) aufweist und daß ein pyroelektrisches Sensorelement (41) des einen Paares (41, 42) und ein gleich polarisiertes pyroelektrisches Sensorelement (44) des anderen Paares parallel zueinander und im Abstand voneinander angeordnet sind und daß die anderen beiden, umgekehrt polarisierten, pyroelektrischen Sensorelemente (42, 43) dazwischen und übereinander angeordnet sind oder daß die vier pyroelektrischen Sensorelemente (41, 42, 43, 44) dicht nebeneinander so angeordnet sind, daß sie ein Rechteck bilden.

2. Pyroelektrischen Sensor gemäß Patentanspruch 1, dadurch gekennzeichnet, daß der pyroelektrische Sensor (3) zwei parallel geschaltete pyroelektrische Sensorelemente (41, 42) in Serie zu zwei weiteren parallel geschalteten pyroelektrischen Sensorelementen (43, 44) aufweist und daß parallel zu den beiden parallel geschalteten Sensorelementen (41, 42; 43, 44) jeweils ein Widerstand (51; 52) geschaltet ist.

3. Pyroelektrischen Sensor gemäß Patentanspruch 1, dadurch gekennzeichnet, daß der pyroelektrische Sensor vier in Serie geschaltete Sensorelemente (41, 42, 43, 44) und in Parallelschaltung zu jedem Sensorelement (41, 42, 43, 44) jeweils einen Widerstand (51, 52, 53, 54) aufweist.

4. Pyroelektrischen Sensor gemäß Patentanspruch 3, dadurch gekennzeichnet, daß der pyroelektrische Sensor parallel zu den vier in Serie geschalteten Sensorelementen (41, 42, 43, 44) jeweils einen parallel geschalteten Widerstand (51, 52, 53, 54) und parallel zu den vier Widerständen (51, 52, 53, 54) einen weiteren Widerstand (55) zwischen dem Gate-Anschluß (G) des Feldeffekttransistors (8) und Erde aufweist.

5. Pyroelektrischen Sensor gemäß Patentanspruch 3, dadurch gekennzeichnet, daß zusätzlich zu den parallel zu den in Serie geschalteten Sensoren (41, 42, 43, 44) geschalteten Widerständen (51, 52, 53, 54) zwei weitere Widerstände (56, 57) zwischen dem Verbindungspunkt des ersten (51) und zweiten Widerstandes (52) und dem Verbindungspunkt zwischen dem ersten (41) und zweiten Sensor (42), sowie zwischen dem Verbindungspunkt des dritten (53) und vierten Widerstandes (54) und dem Verbindungspunkt zwischen dem dritten (43) und vierten Sensor (44) angeordnet sind.

6. Verwendung des pyroelektrischen Sensors gemäß einem der Patentansprüche 1 bis 5 in einem Infraroteindringdetektor zur Detektion des Eindringens Infrarotstrahlung aussendender Objekte in zu überwachende Räume.

## Claims

1. A pyroelectric sensor (3) being used in a passive infrared intrusion detector and comprising a plurality of radiation sensitive sensor elements (41, 42, 43, 44) connected electrically in series or in parallel or a combination therof, the output of said pyroelectric sensor (3) being connected with the gate terminal (G) of a field effect transistor (8) active as impedance buffer characterized in that said plurality of radiation-sensitive sensor elements (41, 42, 43, 44) comprises a first pair (41, 42) of two sensor elements connected in parallel or in series to one another and comprises a second pair (43, 44) of sensor elements connected in prallel or in series to one another, said first and said second pair of sensor elements are connected in parallel or in series to one another, and further characterized in that one pyroelelectric sensor element (41) of the one pair (41, 42) and one pyroelectric sensor element (44) of the same polarity of the other pair (43, 44) are spaced apart from one another and in parallel and that the second (42) and fourth (44) pyroelectric sensor element being of inverse polarity are spaced between the first (41) and third (43) pyroelectric sensor element or characterized in that the four pyroelectric elements (41, 42, 43, 44) are closely spaced to one another with small gaps between them and form a rectangle.

2. A pyroelectric sensor according to patent claim 1, characterized in that the pyroelectric sensor (3) comprises a pair of two pyroelectric sensor elements (41, 42) connected in parallel to each other and connected serially to another pair of two pyroelectric sensor elements (43, 44) connected in parallel to each other and that resistors (51; 52) are electrically connected in parallel to each of the two pairs of sensor elements (41, 42; 43, 44).

3. A pyroelectric sensor according to patent claim 1, characterized in that the pyroelectric sensor (3) comprises four pyroelectric sensor elements (41, 42, 43, 44) connected in series to each other and that resistors (51, 52, 53, 54) are connected in parallel to each of the sensor elements (41, 42, 43, 44).

4. A pyroelectric sensor according to patent claim 3, characterized in that the pyroelectric sensor (3) comprises four pyroelectric sensor elements (41, 42, 43, 44) connected in series to each other and comprises further four resistors (51, 52, 53, 54) each connected in parallel to one of the four sensor elements (41, 42, 43, 44) and comprises finally a fifth resistor (55) connected electrically between the gate (G) of the field effect transistor (8) and the ground connection.

5. A pyroelectric sensor according to patent claim 3, characterized in that the pyroelectric sensor (3) in addition to the four pyroelectric sensor elements (41, 42, 43, 44) connected in series to each other and in addition to the four resistors (51, 52, 53, 54) each connected in parallel to one of the four sensor elements (41, 42, 43, 44) comprises a sixth resistor (56) connecting the junction point between the first (41) and the second (42) sensor element with the junction point between the first (52) and second (52) resistor and comprises further a seventh resistor (57) connecting the junction point between the third (43) and fourth (44) sensor element with the junction point between the third (53) and forth (54) resistor.

6. Application of the pyroelectric sensor according to one of the patent claims 1 to 5, in an infrared intrusion detector for the detection of trepassing of objects emanating infrared radiation in rooms to be protected.

## Revendications

1. Détecteur pyroélectrique comportant plusieurs éléments détecteurs photosensibles placés en série ou en parallèle ou suivant une combinaison série ou parallèle et dont la sortie, pour la mise en oeuvre du détecteur dans un détecteur d'intrusion à infrarouge, est reliée à la borne de grille d'un transistor à effet de champ opérant comme adaptateur d'impédance, caractérisé en ce que le détecteur pyroélectrique (3) comporte deux éléments détecteurs (41, 42) pyroélectriques reliés en parallèle ou en série, et qui sont reliés en série à deux autres éléments détecteurs (43, 44) pyroélectriques montés en parallèle ou en série et en ce qu'un élément détecteur pyroélectrique (41) d'un des couples (41, 42) et un élément détecteur pyroélectrique (44) de l'autre couple, polarisé de manière identique, sont disposés parallèlement entre eux et à distance l'un de l'autre et en ce que les deux autres éléments détecteurs (43, 44) pyroélectriques, polarisés en inverse, sont disposés entre les deux précédents et l'un au-dessus de l'autre ou en ce que les quatre éléments détecteurs (41, 42, 43, 44) pyroélectriques sont disposés tout près les uns des autres de manière qu'ils forment un rectangle.

2. Détecteur pyroélectrique selon la revendication 1, caractérisé en ce que le détecteur pyroélectrique (3) comporte deux élements détecteurs (41, 42) pyrolélectriques montés en parallèle, et sont reliés en série avec deux autres éléments détecteurs (43, 44) pyrolélectriques montés en parallèle et en ce qu'une résistance (51 ; 52) est reliée en parallèle respectivement aux deux éléments détecteurs (41, 42 ; 43, 44) montés en parallèle.

3. Détecteur pyroéléctrique selon la revendication 1, caractérisé en ce que le détecteur pyroélectrique comporte quatre éléments détecteurs (41, 42, 43, 44) reliés en série et respectivement une résistance (51, 52, 53, 54) en montage parallèle sur chaque élément détecteur (41, 42, 43, 44).

4. Détecteur pyroélectrique selon la revendication 3, caractérisé en ce que le détecteur pyroélectrique comporte, parallèlement aux quatre éléments détecteurs (41, 42, 43, 44) reliés en série, respectivement une résistance (51, 52, 53, 54) montée en parallèle et, parallèlement aux quatre résistances (51, 52, 53, 54), une autre résistance (55) montée entre la borne de grille (G) du transistor à effet de champ (8) et la masse.

5. Détecteur pyroélectrique selon la revendication 3, caractérisé en ce que, en plus des résistances (51, 52, 53, 54) montées en parallèle sur les détecteurs (41, 42, 43, 44) reliés en série, deux autres résistances (56, 57) sont disposées entre le point de connexion de la première (51) résistance et la deuxième (52) résistance et le point de connexion entre le premier (41) détecteur et le deuxième (42) détecteur, ainsi qu'entre le point de connexion de la troisième (53) résistance et de la quatrième (54) résistance et le point de connexion entre le troisième (43) détecteur et le quatrième (44) détecteur.

6. Mise en oeuvre du détecteur pyroélectrique selon l'une des revendications 1 à 5, dans un détecteur d'intrusion à infrarouge pour la détection d'intrusion d'objets éméttant un rayonnement infrarouge dans un espace à contrôler.
